# EUROPÄISCHE PATENTSCHRIFT

(11) **EP 0 799 099 B1**
(45) Veröffentlichungstag und Bekanntmachung des Hinweises auf die Patenterteilung: **24.01.2001**
(21) Anmeldenummer: 96937206.9
(22) Anmeldetag: 22.10.1996
(51) Int. Cl.: B07C 1/20

(54) **FÖRDERANLAGE FÜR FLACHE TRANSPORTGÜTER MIT AUSSCHLEUSEVORRICHTUNGEN ZUM AUSSCHLEUSEN DER TRANSPORTGÜTER IN ZWEI ENTGEGENGESETZTE RICHTUNGEN QUER ZUR FÖRDERRICHTUNG**
CONVEYER UNIT FOR FLAT ARTICLES WITH TRANSFER DEVICES FOR TRANSFERRING THE ARTICLES IN TWO OPPOSING DIRECTIONS AT RIGHT ANGLES TO THE DIRECTION OF TRANSPORT
INSTALLATION DE TRANSPORT POUR PRODUITS PLATS DOTEE DE SAS POUR DECHARGER LES PRODUITS DANS DEUX DIRECTIONS TRANSVERSALES A LA DIRECTION DE TRANSPORT

(30) Priorität: 23.10.1995 DE 19539328
(43) Veröffentlichungstag der Anmeldung: 08.10.1997
(73) Patentinhaber: SIEMENS AKTIENGESELLSCHAFT, 80333 München (DE)
(72) Erfinder: MALOW, Siegmar, D-78465 Konstanz (DE)
(86) Internationale Anmeldenummer: EP9604570
(87) Internationale Veröffentlichungsnummer: WO9715405

(56) Entgegenhaltungen:
- EP-A- 0 503 403
- DE-C- 4 416 893
- US-A- 3 420 368

## Beschreibung

Die Erfindung bezieht sich auf eine Förderanlage für flache Transportgüter mit Ausschleusevorrichtungen zum Ausschleusen der Transportgüter, bei der die Transportgüter in einer Förderstrecke auf ihrer Längsachse stehend in im wesentlichen waagerechter Richtung gefördert werden und in zwei entgegengesetzte Richtungen quer zur Förderrichtung in beidseitig der Förderanlage angeordnete Ablage- oder Stapeleinrichtungen flach abgelegt werden.
Zum Ausschleusen in eine Richtung quer zur Förderrichtung wird in der DE 25 23 835 B eine Verteilfördereinrichtung beschrieben, bei der die Sendungen auf ihren Längsseiten stehend befördert werden und mittels als Rutschen ausgebildete Ausschleusevorrichtungen um einen Winkel zur Förderrichtung umgelenkt werden, wobei die Sendungen von der stehenden Position in eine liegende Position geneigt werden.
Durch die Ablage der Transportgüter in zwei Richtungen (links, rechts) quer zur Förderrichtung erreicht man eine insgesamt kürzere Ausschleuserichtung als bei Anlagen mit nur einer Ausschleusevorrichtung. Bei bekannten Förderanlagen mit Ausschleusevorrichtungen zur Ablage der Transportgüter in zwei Richtungen quer zur Förderrichtung liegen die Transportgüter je nach Ausschleuserichtung mit unterschiedlichen Seitenflächen nach oben auf wie zum Beispiel in US 3 420 368 geoffenbart. Um bei den bekannten Förderanlagen eine gleiche Lage der Seitenflächen der Transportgüter links und rechts der Förderstrecke zu erreichen, sind aktive Wendeeinheiten in der Förderstrecke oder in davor liegenden Teilen der Förderanlage erforderlich.
Nachteilig hierbei ist der große technische Aufwand, mit der die Transportgüter vor oder innerhalb der Förderstrecke gewendet werden müssen, damit die Lage einer bestimmten Seitenfläche des flachen Transportguts in der Ablage- oder Stapeleinrichtung unbeeinflußt von der Ausschleuserichtung ist.

Aufgabe der vorliegenden Erfindung ist es daher, eine Förderanlage mit Ausschleusevorrichtungen zum Ausschleusen in zwei Richtungen quer zur Förderrichtung anzugeben, bei der die Lage einer bestimmten Seitenfläche des Transportguts in der Ablage- oder Stapeleinrichtung unbeeinflußt von der Ausschleuserichtung ist und bei der eine aktive aufwendige Wendeeinrichtung in oder vor der Förderstrecke nicht erforderlich ist.

Diese Aufgabe wird durch eine Förderanlage nach Anspruch 1 gelöst.

Vorteilhafte Ausgestaltungen und Weiterbildungen der Erfindung sind den Unteransprüchen zu entnehmen.

Die Ausschleusevorrichtung für die erste bzw. zweite Richtung ist so aufgebaut, daß die sie durchlaufenden Transportgüter unabhängig von der Ausschleuserichtung zwischen der Förderstrecke und den Ablage- oder Stapeleinrichtungen in die erste Richtung um einen vorgegebenen Winkel γ um den Vektor der Geschwindigkeit, die die Transportgüter in der Förderstrecke aufweisen, und je nach Ausschleuserichtung um den Vektor der Erdanziehung in die erste oder zweite Richtung gedreht werden. So nehmen die Seitenflächen des Transportguts unabhängig von der Ausschleuserichtung eine vorgegebene Lage ein. Vorzugsweise betragen die vorgegebenen Winkel α 90°.

Bekannte Ausschleusevorrichtungen sind als Rutschen trogförmig ausgebildet und nach oben hin offen. In ihnen gleiten die Transportgüter durch ihre Massenträgheit und die Hangabtriebskraft, die auf sie wirkt, entlang des Troges und werden dabei zwischen der Förderstrecke und der Ablage- oder Stapeleinrichtung 90° um den Vektor der Geschwindigkeit, die die Transportgüter in der Förderstrecke aufweisen, in die erste Richtung und 90° um den Vektor der Erdanziehung in die zweite Richtung gedreht. So auch bei der vorliegenden Ausschleusevorrichtung in die zweite Richtung.

Bei der vorliegenden Ausschleusevorrichtung in die erste Richtung werden die Transportgüter vorzugsweise zwischen der Förderstrecke und der Ablage- oder Stapeleinrichtung 90° um den Vektor der Geschwindigkeit, die die Transportgüter in der Förderstrecke aufweisen, in die erste Richtung, und 90° um den Vektor der Erdanziehung in die erste Richtung gedreht.

Dies wird vorteilhafterweise durch eine Rutsche erreicht, bei der die kurvenäußere Seitenwand im der Förderstrecke benachbarten Bereich als eine zunächst nahezu senkrechte Leitfläche ausgestaltet ist, die sich im weiteren Verlauf der Rutsche so zur Kurveninnenseite neigt, daß sich der Winkel zwischen der kurvenäußeren Seitenwand und der Senkrechten im weiteren Verlauf der Rutsche vergrößert.

Ein Transportgut, das von der Förderstrecke kommend durch eine solche Rutsche befördert wird, gleitet in Folge seiner Massenträgheit zunächst auf der kurvenäußeren Seitenwand und wird mehr und mehr zur Kurveninnenseite gedreht bis daß es sich je nach Geschwindigkeit und Kurvenausgestaltung von der Kurvenaußenseite löst und auf die andere Seite der Rutsche fällt und dabei weiter zum Ende der Rutsche in die Ablage- oder Stapeleinrichtung gleitet. So wird erreicht, daß die Seitenfläche des Transportguts nach oben aufliegt, die in Förderrichtung der Ausschleuserichtung entgegengesetzt war. Die kurveninnere Seitenfläche der Rutsche kann verschieden ausgestaltet sein.

Besonders vorteilhaft ist es, wenn die Abstände zwischen den Wänden während der Drehungen des Transportguts etwa gleich bleiben, da dann das Transportgut nach dem Ablösen von der Kurvenaußenseite nur einer kurzen Weg zur Oberfläche der Kurveninnenseite hat, und gut zum Ende der Rutsche in die Ablage- oder Stapeleinrichtung weitergeführt werden kann.

Diese Ausführungsform zeichnet sich weiterhin durch einen geringen Platzbedarf bei mehreren nebeneinander liegenden Rutschen aus. Weiterhin ist es vorteilhaft, die Rutsche nach oben hin offen zu gestalten, da dann auch Sendungen ausgeschleust werden können, die höher als die Seitenwände sind. Die Sendungen dürfen aber nur einen kleinen Teil (ca. 20 %, je nach Sendungssteifigkeit) ihrer Abmessungen über den oberen Rutschenrand ragen, damit ein sicheres und störungsfreies Ausschleusen gewährleistet bleibt.

Der Kurvenradius, die Neigung der Kurvenaußenwand nach innen und die Abstände der kurvenäußeren Seitenwand zur kurveninneren Seitenwand müssen so ausgewählt sein, daß das größte durch die Förderanlage zu befördernde Transportgut mit höchstzulässiger Steifigkeit ohne Verkanten oder Klemmen die Rutsche passieren kann.

Die Umlenkung der Transportgüter in die liegende Position muß nicht vollständig in der Rutsche selbst ausgeführt werden. Es ist sogar vorteilhaft, die Umlenkung nicht vollständig in der Rutsche auszuführen, sondern den letzten Rest der Umlenkung beim Herabfallen auf den Stapel in der Ablage- oder Stapeleinrichtung ausführen zu lassen, weil dadurch die Abmessungen der Rutschen kleiner gehalten werden können als bei Rutschen, in denen eine vollständige 90°-Umlenkung ausgeführt wird.

Die Erfindung wird nachfolgend anhand der Figuren für ein besonders bevorzugtes Ausführungsbeispiel näher erläutert.

Es zeigen:

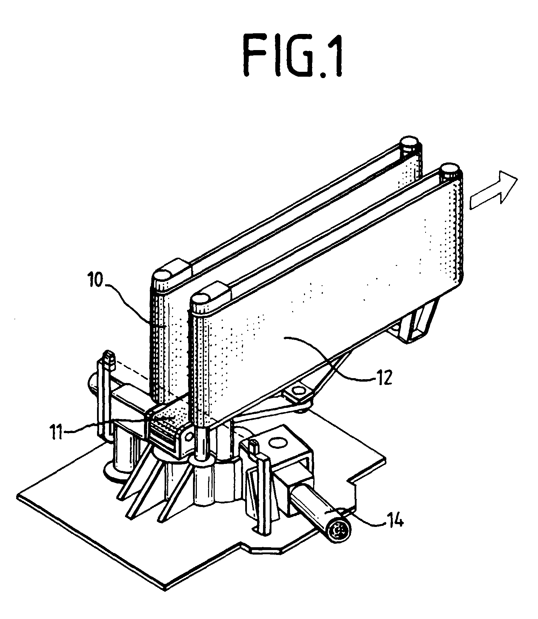

- Fig. 1: ein Fördermodul in Ansicht;
- Fig. 2: die Aufsicht auf eine Förderanlage, bestehend aus Fördermodulen, Rutschen in die erste und Rutschen in die zweite Richtung und Ablage- oder Stapeleinrichtungen, bei der sich ein Fördermodul in Endstellung links befindet;
- Fig. 3: die Aufsicht auf die Förderanlage aus Fig. 2, bei der sich ein Fördermodul in Endstellung rechts befindet;

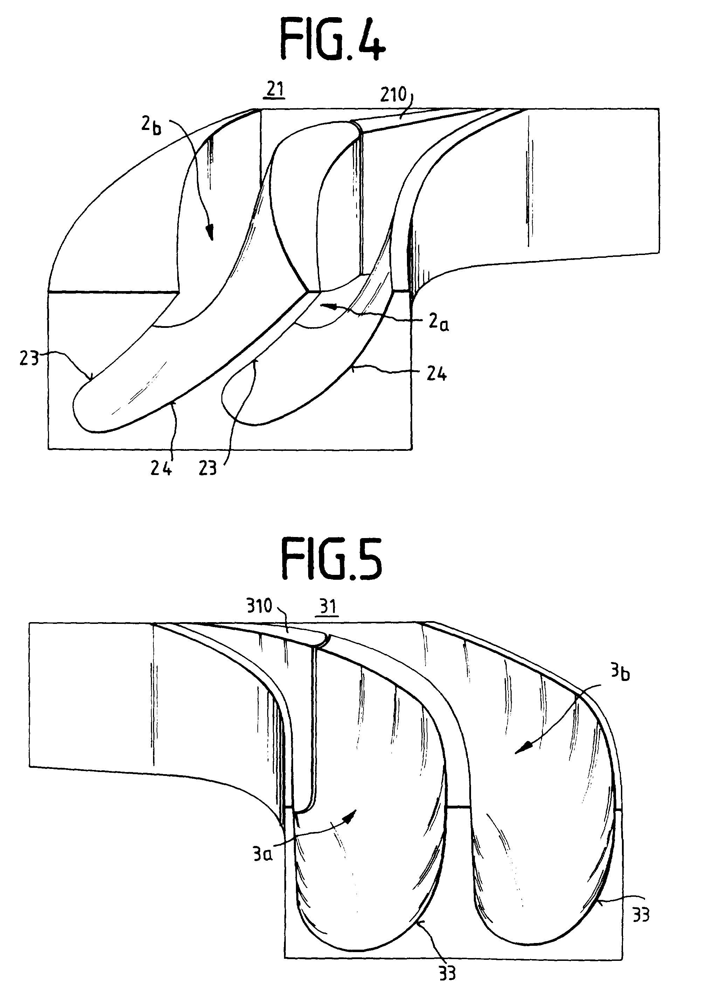

- Fig. 4: die Ansicht einer Doppelrutsche nach links;
- Fig. 5: die Ansicht einer Doppelrutsche nach rechts;
- Fig. 6: die Ansicht einer Rutsche nach links und
- Fig. 7: die Ansicht einer Rutsche nach rechts.

Die erfindungsgemäße Förderanlage besteht aus der Förderstrecke, den Ausschleusevorrichtungen und den Ablage- oder Stapeleinrichtungen. Im vorliegenden Ausführungsbeispiel besteht die Förderstrecke aus Fördermodulen 1ₐ, 1_{b}, 1_{c} die hintereinander angeordnet sind und die in ihrer Grundstellung die Transportgüter vom Fördermodul 1 zum benachbarten Fördermodul 1 weiterbefördern. Jedes Fördermodul 1 kann mittels Pneumatikzylindern 14 in eine Endstellung rechts bzw. Endstellung links gebracht werden, bei der das Transportgut in die rechte bzw. linke Ausschleusevorrichtung geleitet wird. Die Fördermodule 1ₐ bis 1ₙ weisen jeweils drei senkrecht zueinander angeordnete Förderbänder 10, 11, 12 auf, die einen nach oben hin offene Transportkanal bilden und die Transportgüter in ihrer Grundstellung in Transportrichtung 13 weitertransportieren.

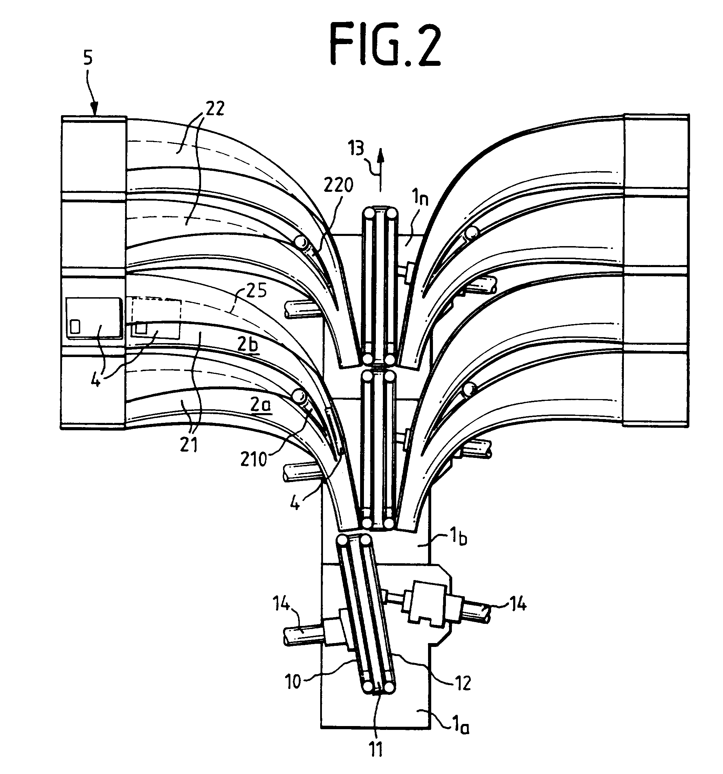

In Fig. 2 sind drei Fördermodule 1ₐ, 1_{b}, 1_{c} und jeweils zwei linke Ausschleusevorrichtungen 21, 22 und zwei rechte Ausschleusevorrichtungen 31, 32 und Ablage- oder Stapeleinrichtungen 5 dargestellt. Das Fördermodul 1ₐ kann die in ihm befindlichen Transportgüter 4 entweder in seiner Grundstellung zu seinem benachbarten Fördermodul 1_{b} weiterleiten oder je nach Endstellung links bzw. Endstellung rechts in die Ausschleusevorrichtung 21 bzw. 31 leiten. Die Ausschleusevorrichtungen 21, 22 sind als Doppelrutschen nach links ausgebildet und bestehen jeweils aus zwei Rutschen nach links 2a, 2b und einer dazwischenliegenden Weiche 210, 220, die die Transportgüter je nach Stellung in die Rutsche nach links 2a bzw. 2b leitet. Die Rutschen nach links 2a, 2b weisen am der Förderstrecke benachbarten Ende eine nach oben hin offene Trogform mit den Seitenwänden 23, 24 auf. Im weiteren Verlauf neigt sich die jeweilige kurvenäußere Seitenwand 23 mehr und mehr zur Kurveninnenseite und hängt über dem Grundradius 25 der jeweiligen Rutsche 1, bis sie an der Ablage- oder Stapeleinrichtung zum benachbarten Ende einen Winkel Â von etwa 45° zur Senkrechten einnimmt. Die kurveninnere Seitenwand 24 hält immer den in etwa gleichen Abstand zur kurvenäußeren Seitenwand 23 ein, damit die durchzuschleusenden Transportgüter ohne Verkanten die jeweilige Rutsche 2a, 2b passieren können.

In Fig. 2 befindet sich das Fördermodul 1ₐ in seiner Endstellung nach links, während sich die Fördermodule 1_{b} und 1ₙ in Grundstellung befinden. Ein Transportgut 4, das sich im Förderkanal von Modul 1ₐ befindet, wird in die Ausschleusevorrichtung 21 befördert. In Folge seiner Massenträgheit gleitet ein noch auf seiner Längsseite stehendes Transportgut 4 in den Trog der als Doppelrutsche ausgebildeten Ausschleusevorrichtung 21 an der Außenwand in Richtung der Rutsche nach links 2b, da es nicht von der Weiche 210 in die Rutsche nach links 2a abgelenkt wird. Während das Transportgut 4 weitergleitet, wird es durch die kurvenäußere Seitenwand 23 der Rutsche 2b mehr und mehr zur kurveninneren Seitenwand 24 gedrückt, bis es sich je nach seinem eigenen Gewicht, Format und Geschwindigkeit von der kurvenäußeren Seitenwand 23 löst, und zur kurveninneren Seitenwand 24 fällt, so daß die Seitenfläche des Transportguts 4, die sich im Förderkanal des Fördermoduls 1 in Förderrichtung rechts befand, nun nach oben zeigt. Das Transportgut 4 rutscht währenddessen weiter und fällt schließlich in die Ablage- oder Stapeleinrichtung 5 mit der Seitenfläche nach oben, die sich in der Förderstrecke auf der rechten Seite befand.

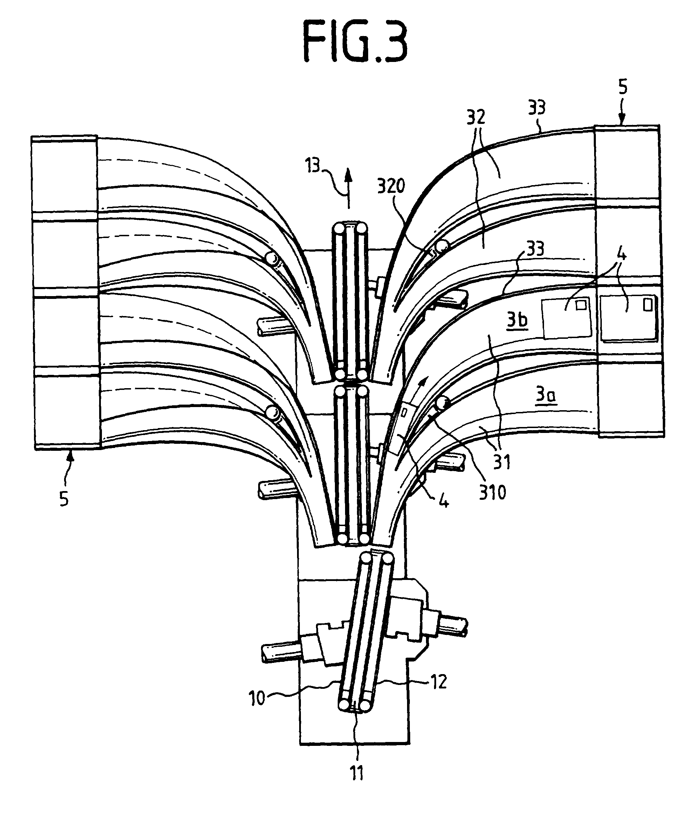

In Fig. 3 befindet sich das Fördermodul 1ₐ in Endstellung rechts, so daß das auszuschleusende Transportgut 4 in die Doppelrutsche 31 gelangt. Die Weiche 310 läßt das Transportgut 4 entlang der kurvenäußeren Seitenwand 33 in die Rutsche 3b gleiten. In Folge der Erdanziehung rutscht das Transportgut 4 gleichzeitig nach unten, so daß das Transportgut 4 am Ende der Rutsche 3b gekrümmt mit der Außenseite, die sich in der Förderstrecke auf der rechten Seite befand, nach oben liegend zur Ablage- oder Stapeleinrichtung 5 gleitet und in diese hineinfällt So werden nacheinander die in die jeweilige Ablage- oder Stapeleinrichtung hineinfallenden Transportgüter 4 übereinander abgelegt.

Die in den Fig. 2, 3, 6 und 7 dargestellten Transportgüter 4 sind wesentlich kürzer dargestellt als in Realität. Dies ermöglicht so eine bessere Darstellung des Bewegungsablaufes.

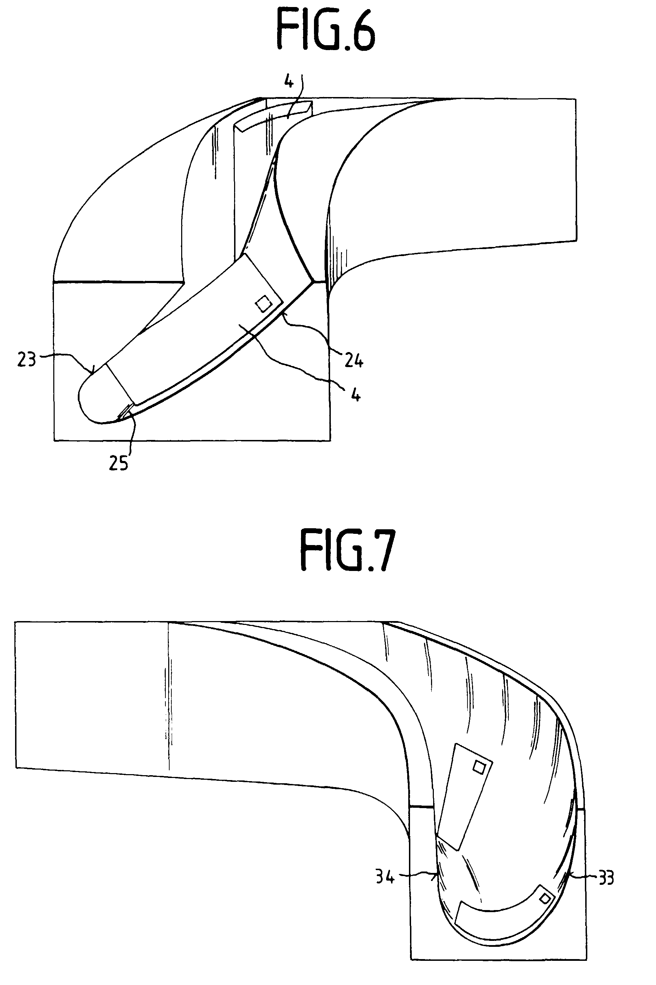

Die Ausgestaltung als Doppelrutsche hat den Vorteil, daß die Anzahl der für eine bestimmte Anzahl von Ablage- oder Stapeleinrichtungen 5 erforderlichen Fördermodule 1 nur halb so groß ist gegenüber einer Lösung mit Einzelrutschen, die in den Fig. 6 und 7 dargestellt sind.

Bei der vorbeschriebenen Ausführungsform ist die erste Richtung quer zur Förderrichtung 13 nach links und die zweite Richtung entsprechend nach rechts. Es ist ebenfalls möglich, die erste Richtung quer zur Förderrichtung nach rechts zu wählen und entsprechend die zweite Richtung nach links. In diesem Fall liegen die Seiten der Transportgüter in den Ablage- oder Stapeleinrichtungen 5 nach oben, die sich in der Förderstrecke in Förderrichtung 13 auf der linken Seite des Transportguts 4 befunden haben.

Es ist auch möglich, die Ausschleusevorrichtung in die erste Richtung mittels zweier Förderbänder zu realisieren, zwischen denen das Transportgut 4 eingeklemmt wird und deren Förderweg so ausgestaltet ist, daß das Transportgut die entsprechenden Umlenkungen erfährt und in den Ablage- oder Stapeleinrichtungen 5 abgelegt wird.

## Patentansprüche

1. Förderanlage für flache Transportgüter (4) bei der die Transportgüter (4) in einer Förderstrecke auf ihren Längsseiten stehend entlang der Förderrichtung (13) befördert werden und durch Ausschleusevorrichtungen in beidseitig der Förderanlage angeordnete Ablage- oder Stapeleinrichtungen (5) liegend abgelegt werden, **dadurch gekennzeichnet**, daß
- jede Ausschleusevorrichtung als oben offene, trogförmige und gekrümmte Rutsche (2a, 2b, 3a, 3b) ausgebildet ist,
- bei jeder Rutsche (2a, 2b) für eine erste Richtung in dem der Förderstrecke benachbarten Bereich die kurvenäußere Seitenwand (23) als eine zunächst nahezu senkrechte Leitfläche ausgestaltet ist, die sich im weiteren Verlauf der Rutsche so nach innen neigt, daß die Transportgüter (4) sich von dieser Seitenwand lösen und nach innen in eine liegende Position kippen,
- bei jeder Rutsche (3a, 3b) für eine entgegengesetzte zweite Richtung in dem der Förderstrecke benachbarten Bereich die kurvenäußere Seitenwand (23) als eine zunächst nahezu senkrechte Leitfläche ausgestaltet ist, die sich im weiteren Verlauf der Rutsche so nach außen neigt, daß die Transportgüter (4) in eine liegende Position gelangen.

2. Förderanlage nach Anspruch 1, **dadurch gekennzeichnet**, daß die Trogform der Rutsche (3a, 3b) für die zweite Richtung einen halbkreis- bis halbovalförmigen Querschnitt längs der jeweiligen Transportrichtung aufweist.

3. Förderanlage nach Anspruch 1, **dadurch gekennzeichnet**, daß die Trogform der Rutsche (3a, 3b) für die zweite Richtung durch zwei aneinandergesetzte Bleche realisiert ist und das kurvenäußere Blech als Leitfläche für die auszuschleusenden Transportgüter (4) die Transportgüter (4) in die zweite Richtung lenkt und dabei nach außen neigt.

4. Förderanlage nach einem der Ansprüche 1 bis 3, **dadurch gekennzeichnet**, daß die Trogform der Rutsche (2a, 2b) für die erste Richtung einen etwa halbovalförmigen Querschnitt aufweist, der sich im Verlauf zwischen der Förderstrecke und der Ablage- oder Stapeleinrichtung um etwa 30 - 60° von der Senkrechten nach innen neigt.

5. Förderanlage nach Anspruch 4, **dadurch gekennzeichnet**, daß die kurvenäußere Seitenwand (23) der Rutsche (2a, 2b) in die erste Richtung an dem der Ablage- oder Stapeleinrichtung benachbarten Ende um einen Winkel von etwa 45° zur Senkrechten nach innen geneigt ist.

6. Förderanlage nach einem der Ansprüche 1 bis 5, **dadurch gekennzeichnet**, daß jeweils zwei Rutschen (2a, 2b, 3a, 3b) in eine Richtung zu einer Doppelrutsche (21, 22, 31, 32) zusammengefaßt sind, bei der die einzelnen Rutschen nebeneinander liegen und eine Weiche (210, 310) zwischen den Rutschen (2a, 2b, 3a, 3b) vorhanden ist, die die Transportgüter zu der jeweils gewünschten Rutsche (2a, 2b, 3a, 3b) leitet.

7. Förderanlage nach einem der Ansprüche 1 bis 6, **dadurch gekennzeichnet**, daß die Ausschleusevorrichtungen so ausgebildet sind, daß die Sendungen um einen Winkel γ von annähernd 90° umgelenkt werden.

8. Ausschleusevorrichtung zum Ausschleusen von Transportgütern (4) aus einer Förderstrecke in eine Ablage- oder Stapeleinrichtung (5) quer zur Förderrichtung, **dadurch gekennzeichnet**, daß sie aus zwei oben offenen, trogförmigen und gekrümmten Rutschen (2a, 2b) besteht, die nebeneinander liegen und zwischen denen eine Weiche (210) vorhanden ist, die die Transportgüter (4) zu der jeweils gewünschten Rutsche (2a, 2b) leitet,
daß bei jeder Rutsche (2a, 2b) in dem der Förderstrecke benachbarten Bereich eine kurvenäußere Seitenwand (23) als eine zunächst nahezu senkrechte Leitfläche ausgestaltet ist, die sich im weiteren Verlauf der Rutsche so nach innen neigt,
daß sich die Transportgüter (4) von dieser Seitenwand (23) lösen und nach innen in eine liegende Position kippen.

## Claims

1. Conveying installation for flat articles (4), in which the articles (4) are conveyed along the conveying direction (13) in a conveying section in a state in which they stand on their longitudinal sides and, by virtue of discharging apparatuses, are set down in a lying position in set-down or stacking devices (5) arranged on both sides of the conveying installation,
characterized in that
- each discharging apparatus is designed as a trough-like and curved chute (2a, 2b, 3a, 3b) which is open at the top,
- in each chute (2a, 2b) for a first direction, in the region adjacent to the conveying section, the side wall (23), which is on the outside of the curve, is configured as an initially virtually vertical directing surface which, as the chute progresses, is inclined inwards such that the articles (4) are detached from said side wall and tilt inwards into a lying position,
- in each chute (3a, 3b) for an opposite, second direction, in the region adjacent to the conveying section, the side wall (23), which is on the outside of the curve, is configured as an initially virtually vertical directing surface which, as the chute progresses, is inclined outwards such that the articles (4) move into a lying position.

2. Conveying installation according to Claim 1, characterized in that the trough form of the second-direction chute (3a, 3b) has a semicircular to semi-oval cross section along the respective transporting direction.

3. Conveying installation according to Claim 1, characterized in that the trough form of the second-direction chute (3a, 3b) is realized by two plates positioned one against the other, and the plate on the outside of the curve, as the directing surface for the articles (4) which are to be discharged, deflects the articles (4) in the second direction and is inclined outwards in the process.

4. Conveying installation according to one of Claims 1 to 3, characterized in that the trough form of the first-direction chute (2a, 2b) has an approximately semi-oval cross section which, between the conveying section and the set-down or stacking device, is inclined inwards through approximately 30 - 60° from the vertical.

5. Conveying installation according to Claim 4, characterized in that, at the end adjacent to the set-down or stacking device, the side wall (23) of the first-direction chute (2a, 2b), said side wall being on the outside of the curve, is inclined inwards by an angle of approximately 45° to the vertical.

6. Conveying installation according to one of Claims 1 to 5, characterized in that in each case two chutes (2a, 2b, 3a, 3b) in one direction are combined to form a double chute (21, 22, 31, 32), in which the individual chutes are located one beside the other and a diverter (210, 310) is provided between the chutes (2a, 2b, 3a, 3b), said diverter directing the articles to the respectively desired chute (2a, 2b, 3a, 3b).

7. Conveying installation according to one of Claims 1 to 6, characterized in that the discharging apparatuses are designed such that the items of mail are deflected by an angle γ of more or less 90°.

8. Discharging apparatus for discharging articles (4) from a conveying section into a set-down or stacking device (5) transversely to the conveying direction, characterized in that it comprises two trough-like and curved chutes (2a, 2b) which are open at the top, located one beside the other and between which there is provided a diverter (210) which directs the articles (4) to the respectively desired chute (2a, 2b),
in that in each chute (2a, 2b), in the region adjacent to the conveying section, a side wall (23), which is on the outside of the curve, is configured as an initially virtually vertical directing surface which, as the chute progresses, is inclined inwards such that the articles (4) are detached from said side wall (23) and are tilted inwards into a lying position.

## Revendications

1. Installation de convoyage pour produits (4) plats à convoyer, dans laquelle les produits (4) à convoyer sont convoyés dans une section de convoyage suivant la direction (13) de convoyage debout sur leurs faces latérales et sont déposés par des dispositifs de transfert couchés dans des dispositifs (5) de dépôt et/ou d'empilage montés de part et d'autre de l'installation de convoyage, caractérisée en ce que
- chaque dispositif de transfert est réalisé en toboggan (2a,2b,3a,3b) ouvert vers le haut, en forme d'auge et incurvé,
- dans chaque toboggan (2a,2b) pour une première direction, la paroi (23) latérale extérieure incurvée est réalisée dans la zone voisine de la section de convoyage en surface de glissement d'abord pratiquement verticale qui s'incline dans la suite du tracé du toboggan vers l'intérieur de telle manière que les produits (4) à convoyer se détachent de cette paroi latérale et basculent vers l'intérieur à une position couchée,
- pour chaque toboggan (3a,3b) pour une seconde direction en sens opposé, la paroi (23) latérale extérieure incurvée est réalisée dans la zone voisine de la section de convoyage en surface de glissement d'abord à-peu-près verticale, qui s'incline dans la suite du tracé du toboggan vers l'extérieur de telle manière que les produits (4) à convoyer arrivent à une position couchée.

2. Installation de convoyage suivant la revendication 1, caractérisée en ce que la forme en auge du toboggan (3a,3b) pour la seconde direction a une section transversale hémi-circulaire à hémi-ovale le long de la section de convoyage associée.

3. Installation de convoyage suivant la revendication 1, caractérisée en ce que la forme en auge du toboggan (3a,3b) pour la seconde direction est réalisée par deux tôles placées l'une contre l'autre et en ce que la tôle extérieure incurvée servant de surface de glissement pour les produits (4) convoyés à transférer dévie les produits (4) convoyés dans la seconde direction et est inclinée vers l'extérieur.

4. Installation de convoyage suivant l'une des revendications 1 à 3, caractérisée en ce que la forme en auge du toboggan (2a,2b) pour la première direction a une section transversale à-peu-près hémi-ovale qui s'incline vers l'intérieur d'environ 30 à 60° par rapport à la verticale dans le tracé entre la section de convoyage et le dispositif de dépôt et/ou d'empilage.

5. Installation de convoyage suivant la revendication 4, caractérisée en ce que la paroi (23) latérale extérieure incurvée du toboggan (2a,2b) dans la première direction est inclinée vers l'intérieur d'un angle d'environ 45° par rapport à la verticale à l'extrémité voisine du dispositif de dépôt et/ou d'empilage.

6. Installation de convoyage suivant l'une des revendications 1 à 5, caractérisée en ce que chaque fois deux toboggans (2a,2b,3a,3b) dans une direction sont réunis en un double toboggan (21,22,31,32), dans lequel les toboggans individuels se trouvent côte à côte et dans lequel est présent un dispositif (210,310) d'aiguillage entre les toboggans (2a,2b,3a,3b), qui guide les produits à convoyer au toboggan (2a,2b,3a,3b) souhaité.

7. Installation de convoyage suivant l'une des revendications 1 à 6, caractérisée en ce que les dispositifs de transfert sont réalisés de telle manière que les colis sont déviés d'un angle γ d'à-peu-près 90°.

8. Dispositif de transfert pour le transfert de produits (4) à convoyer d'une section de convoyage à un dispositif (5) de dépôt et/ou d'empilage transversalement à la direction de convoyage, caractérisé en ce qu'il est constitué de deux toboggans ouverts vers le haut, en forme d'auge et incurvés qui se trouvent côte à côte et entre lesquels est présent un dispositif (210) d'aiguillage qui guide les produits (4) à convoyer au toboggan (2a,2b) souhaité,
en ce que, pour chaque toboggan (2a,2b), une paroi (23) latérale extérieure incurvée est réalisée dans la zone voisine de la section de convoyage en surface de glissement d'abord pratiquement verticale vers l'intérieur qui s'incline dans la suite du tracé du toboggan de telle manière que
les produits (4) à convoyer se détachent de cette paroi (23) latérale et basculent vers l'intérieur à une position couchée.
